# EUROPEAN PATENT SPECIFICATION

(11) **EP 3 558 743 B1**
(45) Date of publication and mention of the grant of the patent: **02.11.2022**
(21) Application number: 17885251.3
(22) Date of filing: 13.12.2017
(51) Int. Cl.: B60K 17/28, B60K 25/02, B60K 25/06

(54) **POWER TAKE-OFF AND PARTS THEREOF**
NEBENABTRIEB UND TEILE DAVON
PRISE DE FORCE ET PIÈCES DE CELLE-CI

(30) Priority: 22.12.2016 SE 1651716
(43) Date of publication of application: 30.10.2019
(73) Proprietor: Scania CV AB, 151 87 Södertälje (SE)
(72) Inventor: PETERSEN, Daniel, 152 51 Södertälje (SE); BERGKVIST, Lars, 187 42 Täby (SE)
(74) Representative: Scania CV AB
(86) International application number: PCT/SE2017/051261
(87) International publication number: WO 2018/117944

(56) References cited:
- EP-A1- 1 634 758
- EP-A2- 0 982 171
- WO-A1-2007/108805
- WO-A1-2014/189456
- WO-A1-2015/005884
- WO-A1-2015/005884
- DE-A1- 4 244 321
- SU-A1- 1 129 085
- US-A- 3 001 409
- US-A- 4 542 801
- US-A1- 2006 260 303
- US-A1- 2010 242 638
- US-A1- 2010 242 638
- US-A1- 2010 296 866
- US-A1- 2014 102 815
- US-A1- 2015 283 899

## Description

### TECHNICAL FIELD

The present invention relates to a main power take-off transmission unit, to a PTO output unit, a PTO, a powertrain and a vehicle. In particular, the present invention relates to such a PTO of a sandwich type.

### BACKGROUND ART

So-called power take-offs, PTOs, are used in vehicles for providing power to other functions of the vehicle than the propulsion of the vehicle. A PTO is usually placed in connection to the power flow between an engine of the vehicle and at least one of the driving wheels. The PTO then usually has an extra output shaft. This extra output shaft can rotate when the engine of the vehicle provides an output torque. It is then possible to connect extra equipment such as, for example, a hydraulic pump, a winch, a water pump, a compactor, or the like, to the extra output shaft of the PTO. This extra equipment can then receive power and/or rotational movement from the engine of the vehicle.

The present invention in particular relates to PTOs of the sandwich type. Such PTOs are mounted in the power transmission path between the engine and the transmission (which may include a clutch and a gearbox). Hence, the PTO is connected in series with the engine and the transmission. The PTO may thus be directly connected to the engine output shaft. Due to the sandwich mounting style of the PTO, the gearbox (and clutch) will be spaced from the engine by the PTO.

Since the extra equipment, which can be connected to the sandwich type PTO, might have quite different demands regarding rotational speed, provided torque, space requirements, and so on, it is usually not possible to provide one PTO fit for all purposes. Instead, several PTOs have to be designed to fulfil the special requirements of different extra equipment, which is demanding due to the constrained space between the engine and the transmission. An operator of a vehicle has to decide about the purpose of the PTO and usually a manufacturer of the vehicle will then build in the corresponding PTO between the engine and the transmission in the vehicle. This is comparable to choosing a usable gearbox or a usable engine for a vehicle, which will then be built in by the manufacturer. Since different PTOs have to be provided for different purposes, this increases costs compared to the case where one PTO would fit all purposes. The increased cost is, among others, due to the need of developing, producing, storing, and planning for several different PTOs.

It would thus be an advantage to get rid of at least some of the disadvantages associated with the need of different PTOs.

Some known examples of PTOs are described in the documents US2010242638 A1 and WO2015005884 A1. In the first named document, an auxiliary clutch is used behind the main gearbox clutch for connecting the PTO. In the second document, a solution with a desired number of PTOs is presented.

### SUMMARY OF THE INVENTION

It is an objective of the present invention to get rid of at least some of the disadvantages associated with the need of different PTOs. It is a further objective of the present invention to limit the amount of different components needed in relation to different PTOs. It is a further objective of the present invention to provide a more flexible solution for providing a PTO. It is a further objective of the present invention to provide an alternative to existing PTOs.

According to a first aspect, a main power take-off (PTO) transmission unit for a vehicle is provided. The main PTO transmission unit is of the sandwich type. The main PTO transmission unit comprises a first gearing and a first house. The first gearing is arranged in the first house. The first house is arranged to be attachable to a second house of a PTO output unit. Further, the first gearing is arranged to transfer torque to a second gearing of the PTO output unit when the first house is attached to the second house. The second gearing is arranged in the second house.

According to a second aspect, a PTO output unit for a vehicle is provided. The PTO output unit comprises a second gearing and a second house. The second gearing is arranged in the second house. The second house is arranged to be attachable to the first house of the main PTO transmission unit according to the first aspect. Further, the second gearing is arranged to be engaged with the first gearing of the main PTO unit when the first house is attached to the second house.

The present aspects allow providing one and the same main PTO transmission unit for several purposes. By providing the PTO in the form of two separate units, wherein one unit is attachable to the other, the PTO output unit can be adapted to the intended use of the PTO and being exchanged if needed. Hence, only the PTO output unit needs to be changed in case the intended use of the PTO changes As the one and the same main PTO transmission unit can be used for several purposes, development costs and storage costs can be lowered. Further, the same component for several purposes is inserted into the powertrain (driveline) of the vehicle, which in particular is advantageous for sandwich type PTOs, which generally have to be designed under strict space constraints. Thus, a later exchange of the PTO output unit does not require any adaptions in the powertrain between the engine and the driving wheels.

In the present specification, the term sandwich type PTO may include a PTO adapted to be mounted between a power source (such as an engine) and a transmission (such as including a gearbox) of the vehicle. Hence, the main PTO transmission unit of the sandwich type may be adapted to be mounted in series with, and in between, the power source and the transmission of the vehicle.

In one embodiment, the main PTO transmission unit according to the first aspect further comprises an input shaft arranged to be connected to an output shaft of a power source of the vehicle, whereby power is enabled to be transferred from the power source to the main PTO transmission unit. As the main PTO transmission unit is of the sandwich type, the input shaft may be adapted to be connected in series with the output shaft of the power source.

In one embodiment, the first gearing comprises one or more gears (gear wheels) arranged to transfer torque from the input shaft to the second gearing when the first house is attached to the second house.

In one embodiment, the main PTO transmission unit further comprises a first coupling arrangement. The first coupling arrangement is arranged to couple and decouple the first gearing to the input shaft. Thereby, the first gearing does not need to rotate in case no output power and/or torque is needed for an extra equipment. Thus, drag losses are reduced.

In one embodiment, at least one gear of the first gearing has an opening. The input shaft extends through the opening. This allows for a convenient way for coupling and decoupling the first gearing from the input shaft.

In one embodiment, the main PTO transmission unit further comprises a brake arrangement. The brake arrangement is arranged to brake at least one gear of the first gearing of the main PTO transmission unit in case the first coupling arrangement is in a state, in which the first gearing is decoupled from the input shaft. This allows to prevent the gearing in the main PTO transmission unit from rotating. This is especially practical in case the gearing has low inertia as it otherwise might rotate unintentionally.

In one embodiment, the brake arrangement is arranged not to brake the at least one gear in case the first coupling arrangement is in a state, in which the first gearing is coupled to the input shaft. This assures that the first gearing can rotate when needed.

In one embodiment, the main PTO transmission unit further comprises a first output shaft, and a second coupling arrangement. The second coupling arrangement is arranged to couple and decouple the first output shaft to the input shaft. This allows providing power and/or torque to an extra equipment without the need of providing propulsion to the vehicle.

In one embodiment, the second coupling arrangement comprises a torsion damper. The torsion damper is arranged on a side of a gear of the first gearing facing towards an opening in the first house. The opening is intended for the input shaft. This allows for a more compact construction, especially when the second coupling arrangement is integrated in the main PTO transmission unit.

In one embodiment, the first output shaft is adapted to be connected to an input shaft of a gearbox of the vehicle (e.g. via a clutch).

In one embodiment, the main PTO transmission unit further comprises an oil pump. The oil pump is arranged to lubricate and cool at least some of the components of the main PTO transmission unit. This increases flexibility since the main PTO transmission unit does not need to be adapted to the oil systems of the vehicle.

In one embodiment, the main PTO transmission unit further comprises a flywheel. The flywheel is coupled to the input shaft. This allows for a compact construction since the flywheel is integrated with the main PTO transmission unit.

In one embodiment, the PTO output unit according to the second aspect further comprises a second output shaft arranged to be connected to an extra equipment of the vehicle. The second house may comprise an opening for the second output shaft.

At least some of the objectives are also achieved by a PTO. The PTO comprises a main PTO transmission unit according to the first aspect and the PTO output unit according to the second aspect.

In one embodiment, the first and the second house are attached to each other by fastening means.

At least some of the objectives are also achieved by a powertrain for a vehicle. The powertrain comprises the PTO as defined above.

At least some of the objectives are also achieved by a vehicle comprising the powertrain as defined above.

The vehicle, powertrain and the PTO have corresponding advantages as have been described in relation to the main PTO transmission unit and the PTO output unit.

Further advantages of embodiments the present invention are described in the following detailed description and/or will arise to a person skilled in the art when performing the invention.

### BRIEF DESCRIPTION OF THE DRAWINGS

For a more detailed understanding of embodiments of the present invention and its objects and advantages, reference is made to the following detailed description, which should be read together with the accompanying drawings. Same reference numbers refer to same components in the different figures. In the following,
Fig. 1 shows, in a schematic way, a vehicle according to one embodiment of the present invention;
Fig. 2 shows, in a schematic way, a PTO according to an embodiment of the present invention;
Fig. 3 shows, in a schematic way, a cross-section of a side view of an embodiment of a PTO according to the present invention;
Fig. 4 shows, in a schematic way, a side view of an embodiment of a PTO according to the present invention;
Fig. 5 shows, in a schematic way, a rear view of an embodiment of a PTO according to the present invention;
Fig. 6 shows, in a schematic way, a front view of an embodiment of a PTO according to the present invention.

### DETAILED DESCRIPTION

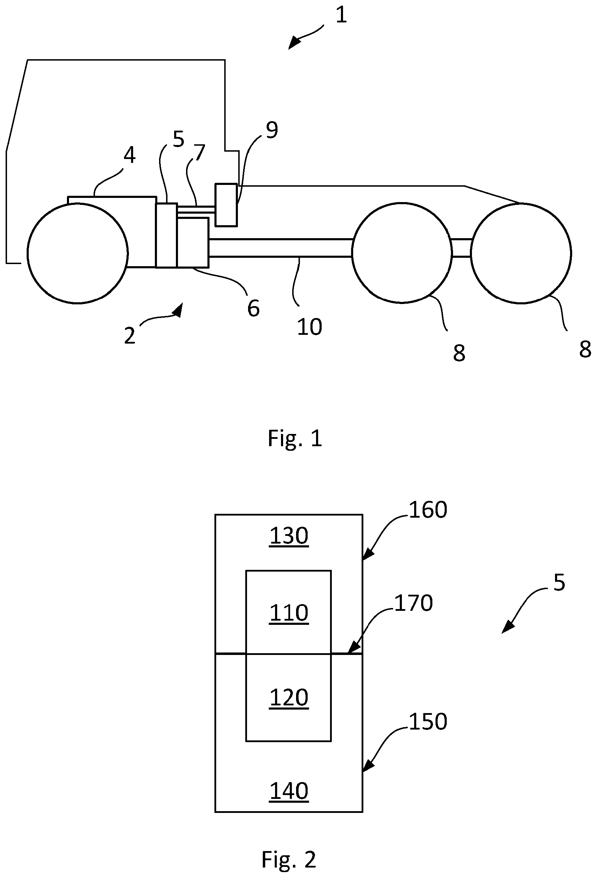

Fig. 1 shows schematically a side view of a vehicle 1. The vehicle can be a truck. However, any other vehicle, such as a passenger car, a tractor, a boat, a ship, or the like, is possible as well. The vehicle comprises a powertrain 2. The powertrain 2 can be provided with a gearbox 6. The powertrain 2 comprises also a power source, such as an engine 4, such as an internal combustion engine or an electric machine. The gearbox 6 is connected to driving wheels 8 of the vehicle 1 via a propeller shaft 10. A power take-off 5, PTO 5, is placed between the engine 4 and the gearbox 6. This type pf PTO is called a sandwich type PTO, which means that the PTO 5 is adapted to be positioned in series (as seen in the main power flow of the powertrain) with the power source 4 and the gearbox 6.The PTO 5 may be connected to an extra output shaft 7. The extra output shaft 7 may in turn be connected to an extra equipment 9. By that, the power and/or torque from the engine 4 can be used by the extra equipment 9.

Fig. 2 shows, in a schematic way, a PTO 5 according to an embodiment of the present invention. The PTO 5 is of the sandwich type as indicated in Fig. 1. The PTO comprises a main PTO transmission unit 140 and a PTO output unit 130. The main PTO transmission unit 140 comprises a first house 150 and a first gearing 120. The first gearing 120 of the main PTO transmission unit 140 can comprise one or several gears. The PTO output unit 130 comprises a second house 160 and a second gearing 110. The second gearing 110 of the PTO output unit 130 can comprise one or several gears. The first gearing 120 is arranged in the first house 150. The second gearing 110 is arranged in the second house 160.

The first house 150 and the second house 160 are attachable to each other. The attachment can be provided via an interface 170. The interface 170 can be a standardised interface. Having the first and second house attachable to each other has the advantage that the PTO output unit can be exchanged without the need to change anything in the power transmission from the engine to the drive wheels. Thus, it is possible to provide a different PTO if needed by only changing the PTO output unit 130. A common main PTO transmission unit 140 can be used for all purposes. Thus, only one main PTO transmission unit 140 needs to be provided for a manufacturer of the vehicles instead of several PTO units as in the prior art.

Thus, the solution to divide the PTO into a main PTO transmission unit 140 and a PTO output unit 130, wherein the main PTO transmission unit 140 preferably is kept the same for different purposes, makes constructions of vehicles less complex, but still allows increased flexibility for providing different extra equipment for the vehicle. Further, a later exchange of extra equipment, which requires a different setup in the PTO will be facilitated since only a part of the PTO, namely the PTO output unit 130, needs to be changed. This lowers the cost of changing the setup of the PTO since a disconnecting and reconnecting of the PTO to the engine and the gearbox, respectively, will not be needed to be performed.

For example, the first house 150 may comprise an opening arranged to mate with an opening of the second house 160. These openings may enable the first and second gearings 120, 110 to mesh (engage) with each other.

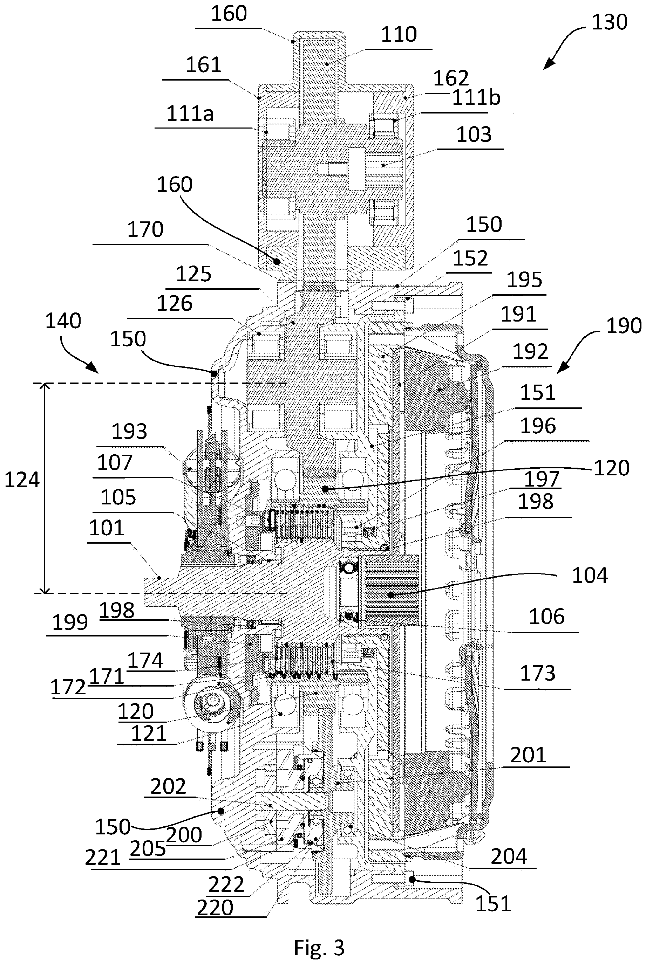

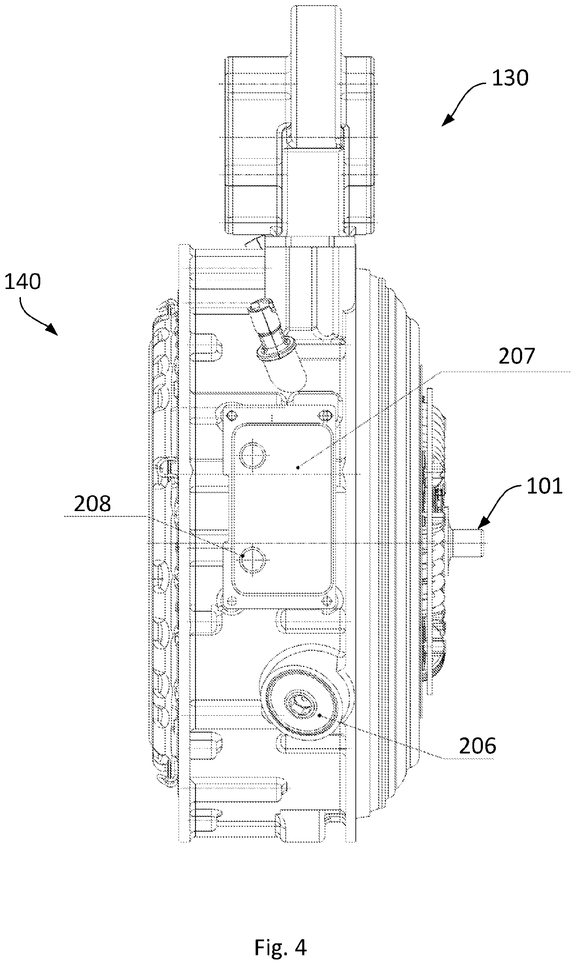

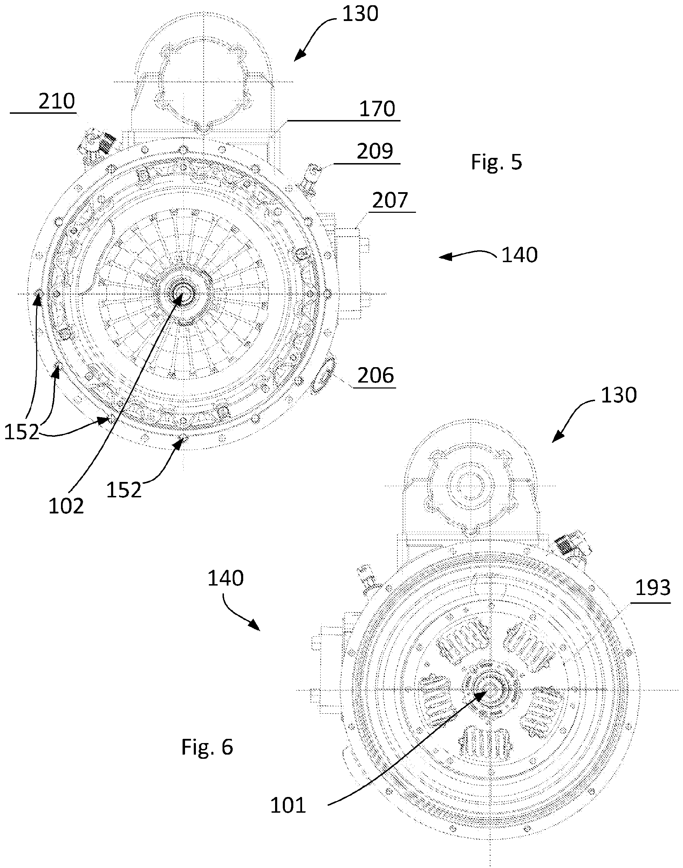

The first gearing 110 and the second gearing 120 are preferably in rotational connection with each other. The interface between the first and the second houses 150, 160, is preferably adapted such that an exchange is facilitated. In one example, the attachment between the first and the second houses 150, 160 may be realized by fastening means, such as screws. In Fig. 3-6 a specific embodiment of the present invention is described. Several examples and further developments of the present invention are described in relation to this embodiment. It should be understood that these examples and developments can be performed independently of the specific embodiment described here. The Figs. 3-6 show the same embodiment of the present invention. Fig. 3 shows a cross-section of a side view of the PTO, Fig. 4 a side view from the side, which is opposite the side of Fig. 3, Fig. 5 shows a rear view, and Fig. 6 a front view of the PTO. The term rear view relates to the fact that this side of the PTO is to be connected to the gearbox. The term front view relates to the fact that this side of the PTO is to be connected to the engine.

The PTO comprises a PTO output unit 130 and a main PTO transmission unit 140. An interface 170 is provided between the PTO output unit 130 and the main PTO transmission unit 140. The main PTO transmission unit 140 comprises an input shaft 101. The input shaft 101 is adapted to be connected to an output shaft of an engine. The main PTO transmission unit 140 can further comprise a first output shaft 102 (illustrated in Fig. 5). The first output shaft 102 is adapted to be connected to an input shaft of a gearbox. The PTO output unit 130 comprises a second output shaft 103. The second output shaft 103 is arranged to be connected to an extra equipment of the vehicle to be driven by the PTO.

The PTO output unit 130 comprises a second house 160. The second house 160 is adapted to provide an opening for the second output shaft 103. In the shown example, a first cover 161 is provided at the PTO output unit 130. This first cover 161 is arranged to cover one side of the second house 160. In the shown example, a second cover 162 is provided at the PTO output unit 130. The second cover 162 is arranged to cover another side of the second house 160.

In the shown example, the PTO output unit 130 comprises a second gearing, which in the present example is constituted by a second gear 110. The second gear 110 circumferentially surrounds the second output shaft 103. The second gear 110 is arranged in the second house 160. In one example the second gear 110 and/or the second output shaft 103 is mounted on second bearings 111a, 111b in the second house 160. The second bearings 111a, 111b can be cylindrical roller bearings. In the shown example, the second bearings comprise a first bearing arrangement 111a on one side of the second gear 110 and a second bearing arrangement 111b on the other side of the second gear 110.

The main PTO transmission unit 140 comprises a first gearing, which in the present example is comprises a first gear 120. The first gear 120 has an opening. The input shaft 101 is arranged through the opening of the first gear 120. The first gear 120 thus circumferentially surrounds the first input shaft 101. The first gearing of the main PTO transmission unit 140 can comprise further gears. As an example, the main PTO transmission unit 140 can comprise a third gear 125. In one example, the main PTO transmission comprises a first gear 120 and a third gear 125. The central axis of the third gear 125 can be arranged at a first distance 124 from the central axis of the first gear. The first gear 120 and the third gear 125 are in rotational connection with each other. In one example, the first gear 120 and the third gear 125 are in mesh with each other.

When assembled, the second gear 110 of the PTO output unit 130 and the third gear 125 of the main PTO transmission unit 140 are in rotational connection with each other. In one example, the second gear 110 and the third gear 125 are in mesh with each other. As a result, the first gear 120 and the second gear 110 are in rotational connection to each other. Providing a third gear has the advantage that the offset between the input shaft 101 and the second output shaft 103 can be increased without needing too big gears. In one example, further gears can be arranged between the first and the second gear.

The main PTO transmission unit 140 comprises a first house 150. The first house 150 has an opening for the input shaft 101. In the shown example, a third cover 151 is provided at the main PTO transmission unit 140. This third cover 151 is arranged to cover one side of the first house 150. In the shown example, the third cover 151 is attached to the first house 150 by a at least one screw 152. Not all of these screws are denoted by reference signs on Fig. 5 for not overloading the figure.

The main PTO transmission unit 140 comprises a first coupling arrangement. The first coupling arrangement is arranged to couple and decouple the first gear 120 to the input shaft 101. The first coupling arrangement can comprise a dog clutch. The first coupling arrangement can comprise a multi-plate clutch. The first coupling arrangement can be air-actuated. In the shown example, the first coupling arrangement comprises clutch discs 174. The first coupling arrangement further comprises steel discs 171, separation springs 172, and/or a pressure plate 173. Preferably, the first coupling arrangement is operated so that the first gear 120 is decoupled from the input shaft 101 in case the extra equipment does not require power and/or torque from the engine. Preferably, the first coupling arrangement is operated so that the first gear 120 is coupled to the input shaft 101 in case the extra equipment does require power and/or torque from the engine.

The main PTO transmission unit 140 comprises a second coupling arrangement. The second coupling arrangement is arranged to couple and decouple the first output shaft 102 to the input shaft 101. The first output shaft 102 is not shown in Fig. 3 but in Fig. 5. However, the first output shaft is intended to be placed in the horizontal extension of the input shaft 101. The first output shaft 102 then preferably meshes with the gear arrangement 104. The second coupling arrangement preferably comprises a clutch 190, which may be main clutch of the powertrain arranged to control the transfer of torque between the engine and the gearbox. In the shown example, the clutch comprises a clutch disc 191 and a clutch cover 192. The second coupling arrangement can further comprise at least one torsion damper 193.

This allows operating the PTO in either one of the following modes. In a first mode, power from the engine is transmitted via the PTO to the gearbox. The first coupling arrangement is in a state, in which the second output shaft 103 of the PTO output unit 130 is decoupled and the second coupling arrangement is in a state where the first output shaft 102 is connected to the input shaft 101 of the main PTO transmission unit 140. Thus, all output power and torque is available at the gearbox and no torque is transferred to the second output shaft 103. The first mode may e.g. be used when the vehicle is driving and no extra equipment is in use.

In a second mode, power from the engine is transmitted via the PTO to the gearbox and to the second output shaft 103. The first coupling arrangement is in a state, in which the second output shaft 103 is coupled to the input shaft 101 and the second coupling arrangement is in a state, in which the first output shaft 102 is connected to the input shaft 101. Thus, output power and/or torque is available at both the gearbox and the second output shaft 103 of the PTO output unit 130. The second mode may e.g. be used when the vehicle is driving while extra equipment is in use.

In a third mode, power from the engine is transmitted via the PTO to the second output shaft 103 of the PTO output unit 130. The first coupling arrangement is in a state, in which the second output shaft 103 is coupled to the input shaft 101 and the second coupling arrangement is in a state, in which the first output shaft 102 is disconnected from the input shaft 101. Thus, all output power and/or torque is available at the second output shaft 103 of the PTO output unit 130 and no torque is transferred to the gearbox. The third mode may e.g. be used when the vehicle is stationary and extra equipment is in use.

In a fourth mode, power from the engine is not transmitted to any output shaft. The first coupling arrangement is in a state, in which the second output shaft 103 of the PTO output unit 130 is decoupled from the input shaft 101 of the main PTO transmission unit 140 and the second coupling arrangement is in a state, in which the first output shaft 102 is decoupled from the input shaft 101. The fourth mode may e.g. be used when the vehicle is stationary and no extra equipment is in use.

In a preferred example, the at least one torsion damper 193 is arranged at another (opposite) side of the first gear 120 than the clutch 190. In the shown example, the torsion damper 193 is arranged on the side of the first gear 120, which is oriented towards the engine. In the shown example, the clutch 190 is arranged on the side of the first gear 120, which is oriented towards the gearbox.

In one example, the third gear 125 is mounted on third bearings 126 in the first house 150. The third bearings 126 can be cylindrical roller bearings. In the shown example the third bearings 126 comprise a first bearing arrangement on one side of the third gear 125 and a second bearing arrangement on the other side of the third gear 125.

In one example, the first gear 120 is mounted on first bearings 121 in the first house 150. The first bearings 121 can be ball bearings. In the shown example, the first bearings 121 comprise a first bearing arrangement on one side of the first gear 120 and a second bearing arrangement on the other side of the first gear 120.

In one example, the input shaft 101 is mounted on first shaft bearings 105 in the first house 150. The first shaft bearings 105 can be roller bearings, such as drawn cup needle roller bearings.

In one example, the first output shaft 102 is mounted on second shaft bearings 106 in the first house 150. The second shaft bearings 106 can be ball bearings.

In one example, the first coupling arrangement is mounted to the first house 150 via a first coupling bearing arrangement 107. The first coupling bearing arrangement 107 can comprise roller bearings, such as axial needle roller bearings.

The main PTO transmission unit 140 can comprise a flywheel 195. The flywheel 195 can be connected to the input shaft 101. This connection can be performed via a spline, screw(s), nut(s), and/or via welding. The flywheel can be arranged to store rotational energy from the engine. The flywheel 195 can be mounted to the first house 150 on flywheel bearings 196. The flywheel bearings 196 can be roller bearings, preferably cylindrical roller bearings.

A first sealing 197 can be provided for sealing a gap between the flywheel 195 and the first house 150. An O-ring 198 can be provided for sealing a gap between the flywheel 195 and the input shaft 101. A second sealing 198 can be provided for sealing a gap between the input shaft 101 and the first house 150.

The main PTO transmission unit 140 can comprise a piston 199. The piston 199 can be arranged for actuating a clutch in the first coupling arrangement.

The main PTO transmission unit 140 can further comprise an oil pump 200. The oil pump 200 can be arranged to lubricate at least some of the components of the main PTO transmission unit 140. The oil pump 200 can be arranged to cool at least some of the components of the main PTO transmission unit 140.

In one example, the PTO 140 comprises an oil pump gear 201. The oil pump gear is preferably in rotational connection with the first gear 120. The PTO can further comprise an oil pump shaft 202.

The oil pump gear 201 circumferentially surrounds the oil pump shaft 202. The oil pump gear 201 and the oil pump shaft 202 are preferably arranged in the first house 150. The oil pump gear 201 and the oil pump shaft 202 are preferably arranged to provide power and/or torque to the oil pump 202.

In one example, the oil pump shaft 202 is mounted on oil pump shaft bearings 204 in the first house 150. The oil pump shaft bearings 204 can be ball bearings. In the shown example the oil pump shaft bearings 204 comprise a first bearing arrangement on one side of the oil pump gear 201 and a second bearing arrangement on the other side of the oil pump gear 201.

The PTO can further comprise an oil pump cover 205. The oil pump cover can be arranged to protect the oil pump against the oil pump gear 201. The PTO can further be equipped with an oil filter 206. The oil filter 206 can be arranged for cleaning of the oil, which is used in the PTO. In one example, the PTO comprises an oil cooler 207 for cooling the oil, which is supplied by the oil pump 200. The oil cooler 200 can comprise cooling channels being arranged to cool the oil. The cooling channels can be arranged to allow for water transport. The oil cooler can have connections 208 for a water supply. The oil cooler can be arranged to be connected to the cooling system of the vehicle. The PTO can further comprise a dipstick holder 209 for an oil dipstick. The PTO can also comprise a rotational sensor 210 for surveying the rotational speed of any of the gears inside the PTO.

The main PTO transmission unit 140 can further comprise a brake arrangement. The brake arrangement is arranged to brake at least one gear of the main PTO transmission unit 140 in case the first coupling arrangement is in a state where the first gear 120 is decoupled from the input shaft 101. This allows preventing the first gear 120 from rotational movements when it is decoupled from the input shaft. The brake arrangement is arranged not to brake the first gear 120 in case the first coupling arrangement is in a state where the first gear 120 is coupled to the input shaft 101. This assures not to brake the first gear when it should rotate.

The brake arrangement can comprise a cone brake 220. In the shown example the cone brake 220 acts on the oil pump gear 201. Since the oil pump gear 201 is in rotational connection with the first gear 120, or even can be in mesh with the first gear 120 as in the shown example, a braking of the oil pump gear 201 will also brake the first gear 120. The cone brake 220 can be activated by a spring 221, such as a wave spring. The brake arrangement can further comprise X-rings 222 to seal a brake piston to ensure proper dis-engagement of a brake in the brake arrangement when the PTO is in use.

## Claims

1. A main power take-off (PTO) transmission unit (140) of the sandwich type for a vehicle (1), the main PTO transmission unit comprising:
- a first house (150) and
- a first gearing (120) arranged in the first house (150),
wherein the first house (150) is arranged to be attachable to a second house (160) of a PTO output unit (130),
wherein the first gearing (120) is arranged to transfer torque to a second gearing (110) of the PTO output unit (130) when the first house (150) is attached to the second house (160), the second gearing (110) being arranged in the second house (160),
**characterised in that,**
the main PTO transmission unit is adapted to be mounted in series with, and in between, a power source and a transmission of the vehicle, wherein the main PTO transmission unit (140) further comprises an input shaft (101) arranged to be connected to an output shaft of the power source (4) of the vehicle (1), and a first coupling arrangement, wherein the first coupling arrangement is arranged to couple and decouple the first gearing (120) to the input shaft (101).

2. The main PTO transmission unit (140) according to claim 1, wherein the first gearing comprises one or more gears (120, 125) arranged to transfer torque from the input shaft (101) to the second gearing (110) when the first house is attached to the second house.

3. The main PTO transmission unit (140) according to claim 1 or 2, further comprising a brake arrangement being arranged to brake at least one gear (120, 201, 125) of the first gearing of the main PTO transmission unit (140) in case the first coupling arrangement is in a state, in which the first gearing (120) is decoupled from the input shaft (101).

4. The main PTO transmission unit (140) according to any one of the preceding claims, wherein the brake arrangement is arranged not to brake the at least one gear (120, 201, 125) in case the first coupling arrangement is in a state, in which the first gearing (120) is coupled to the input shaft (101).

5. The main PTO transmission unit (140) according to any one of the preceding claims, further comprising a first output shaft (102) and a second coupling arrangement, wherein the second coupling arrangement is arranged to couple and decouple the first output shaft (102) to the input shaft (101).

6. The main PTO transmission unit (140) according to claim 5, wherein the first output shaft (102) is adapted to be connected to an input shaft of a gearbox (6) of the vehicle (1).

7. The main PTO transmission unit (140) according to any one of the previous claims, further comprising an oil pump (200) being arranged to lubricate and cool at least some of the components of the main PTO transmission unit (140).

8. The main PTO transmission unit (140) according to any one of the previous claims, further comprising a flywheel (195) being coupled to the input shaft (101).

9. A PTO output unit (130) for a vehicle (1), the PTO output unit comprising:
- a second house (160) and
- a second gearing (110) arranged in the second house (160),
**characterised in that** the second house (160) is arranged to be attachable to the first house (150) of the main PTO transmission unit (140) according to any one of the previous claims,
wherein the second gearing (110) is arranged to be engaged with the first gearing (120) of the main PTO unit (140) when the first house is attached to the second house.

10. The PTO output unit (130) according to claim 9, further comprising a second output shaft (103) arranged to be connected to an extra equipment of the vehicle (1).

11. A PTO (5) comprising the main PTO transmission unit (140) according to any one of claims 1-8 and the PTO output unit (130) according to any one of claims 9-10.

12. A powertrain (2) for a vehicle (1), the powertrain comprising the PTO (5) according to claim 11.

13. A vehicle (1) comprising the powertrain (2) according to claim 12.

## Patentansprüche

1. Hauptzapfwellengetriebeeinheit (140) vom Sandwich-Typ für ein Fahrzeug (1), wobei die Hauptzapfwellengetriebeeinheit aufweist:
- ein erstes Gehäuse (150) und
- ein in dem ersten Gehäuse (150) angeordnetes erstes Räderwerk (120),
wobei das erste Gehäuse (150) dazu ausgeführt ist, an einem zweiten Gehäuse (160) einer Zapfwellenabtriebseinheit (130) befestigt zu werden,
wobei das erste Räderwerk (120) dazu angeordnet ist, Drehmoment auf ein zweites Räderwerk (110) der Zapfwellenabtriebseinheit (130) zu übertragen, wenn das erste Gehäuse (150) an dem zweiten Gehäuse (160) befestigt ist, wobei das zweite Räderwerk (110) in dem zweiten Gehäuse (160) angeordnet ist,
**dadurch gekennzeichnet, dass** die Hauptzapfwellengetriebeeinheit dazu ausgeführt ist, in Reihe mit und zwischen einer Kraftquelle und einer Kraftübertragung des Fahrzeugs montiert zu werden, wobei die Hauptzapfwellengetriebeeinheit (140) ferner eine Eingangswelle (101), die zum Verbinden mit einer Ausgangswelle der Kraftquelle (4) des Fahrzeugs (1) angeordnet ist, und eine erste Kupplungsanordnung umfasst, wobei die erste Kupplungsanordnung dazu angeordnet ist, das erste Räderwerk (120) mit der Eingangswelle (101) zu kuppeln und zu entkuppeln.

2. Hauptzapfwellengetriebeeinheit (140) nach Anspruch 1, wobei das erste Räderwerk ein oder mehrere Zahnräder (120, 125) umfasst, die dazu angeordnet sind, Drehmoment von der Eingangswelle (101) auf das zweite Räderwerk (110) zu übertragen, wenn das erste Gehäuse an dem zweiten Gehäuse befestigt ist.

3. Hauptzapfwellengetriebeeinheit (140) nach Anspruch 1 oder 2, ferner umfassend eine Bremsanordnung, die dazu eingerichtet ist, mindestens ein Zahnrad (120, 125) des ersten Räderwerks der Hauptzapfwellengetriebeeinheit (140) abzubremsen, wenn sich die erste Kupplungsanordnung in einem Zustand befindet, in dem das erste Räderwerk (120) von der Eingangswelle (101) entkuppelt ist.

4. Hauptzapfwellengetriebeeinheit (140) nach einem der vorhergehenden Ansprüche, wobei die Bremsanordnung dazu eingerichtet ist, das mindestens eine Zahnrad (120, 201, 125) nicht abzubremsen, wenn sich die erste Kupplungsanordnung in einem Zustand befindet, in dem das erste Räderwerk (120) mit der Eingangswelle (101) gekuppelt ist.

5. Hauptzapfwellengetriebeeinheit (140) nach einem der vorhergehenden Ansprüche, ferner umfassend eine erste Abtriebswelle (102) und eine zweite Kupplungsanordnung, wobei die zweite Kupplungsanordnung dazu angeordnet ist, die erste Abtriebswelle (102) mit der Eingangswelle (101) zu kuppeln und zu entkuppeln.

6. Hauptzapfwellengetriebeeinheit (140) nach Anspruch 5, wobei die erste Abtriebswelle (102) dazu eingerichtet ist, mit einer Eingangswelle eines Getriebes (6) des Fahrzeugs (1) verbunden zu werden.

7. Hauptzapfwellengetriebeeinheit (140) nach einem der vorhergehenden Ansprüche, ferner umfassend eine Ölpumpe (200), die dazu angeordnet ist, zumindest einige der Komponenten der Hauptzapfwellengetriebeeinheit (140) zu schmieren und zu kühlen.

8. Hauptzapfwellengetriebeeinheit (140) nach einem der vorhergehenden Ansprüche, ferner umfassend ein mit der Eingangswelle (101) gekoppeltes Schwungrad (195).

9. Zapfwellenabtriebseinheit (130) für ein Fahrzeug (1), wobei die Zapfwellenabtriebseinheit aufweist:
- ein zweites Gehäuse (160) und
- ein in dem zweiten Gehäuse (160) angeordnetes zweites Räderwerk (110),
**dadurch gekennzeichnet, dass** das zweite Gehäuse (160) dazu ausgeführt ist, an dem ersten Gehäuse (150) der Hauptzapfwellengetriebeeinheit (140) nach einem der vorhergehenden Ansprüche befestigt zu werden,
wobei das zweite Räderwerk (110) dazu angeordnet ist, mit dem ersten Räderwerk (120) der Hauptzapfwellengetriebeeinheit (140) in Eingriff zu stehen, wenn das erste Gehäuse an dem zweiten Gehäuse befestigt ist.

10. Zapfwellenabtriebseinheit (130) nach Anspruch 9, ferner umfassend eine zweite Abtriebswelle (103), die dazu eingerichtet ist, mit einer Zusatzausrüstung des Fahrzeugs (1) verbunden zu werden.

11. Nebenabtrieb (5) umfassend die Hauptzapfwellengetriebeeinheit (140) nach einem der Ansprüche 1 bis 8 und die Zapfwellenabtriebseinheit (130) nach einem der Ansprüche 9 bis 10.

12. Antriebsstrang (2) für ein Fahrzeug (1), wobei der Antriebsstrang den Nebenabtrieb (5) nach Anspruch 11 umfasst.

13. Fahrzeug (1) mit dem Antriebsstrang (2) nach Anspruch 12.

## Revendications

1. Unité principale de transmission de prise de force (PTO) (140) du type sandwich pour un véhicule (1), l'unité principale de transmission de PTO comprenant :
- un premier logement (150) et
- un premier engrenage (120) disposé dans le premier logement (150),
dans laquelle le premier logement (150) est disposé pour pouvoir être fixé à un deuxième logement (160) d'une unité de sortie de PTO (130),
dans laquelle le premier engrenage (120) est disposé pour transférer un couple à un deuxième engrenage (110) de l'unité de sortie de PTO (130) lorsque le premier logement (150) est fixé au deuxième logement (160), le deuxième engrenage (110) étant disposé dans le deuxième logement (160),
**caractérisée en ce que,**
l'unité principale de transmission de PTO est adaptée pour être montée en série avec, et entre, une source de force et une transmission du véhicule, dans laquelle l'unité principale de transmission de PTO (140) comprend en outre un arbre d'entrée (101) disposé pour être relié à un arbre de sortie de la source de force (4) du véhicule (1), et un premier dispositif d'accouplement, dans lequel le premier dispositif d'accouplement est disposé pour coupler le premier engrenage (120) à l'arbre d'entrée (101) et le découpler de celui-ci.

2. Unité principale de transmission de PTO (140) selon la revendication 1, dans laquelle le premier engrenage comprend un ou plusieurs pignons (120, 125) disposés pour transférer un couple de l'arbre d'entrée (101) au deuxième engrenage (110) lorsque le premier logement est fixé au deuxième logement.

3. Unité principale de transmission de PTO (140) selon la revendication 1 ou 2, comprenant en outre un dispositif de frein disposé pour freiner au moins un pignon (120, 201, 125) du premier engrenage de l'unité principale de transmission de PTO (140) dans le cas où le premier dispositif d'accouplement est dans un état, dans lequel le premier engrenage (120) est découplé de l'arbre d'entrée (101).

4. Unité principale de transmission de PTO (140) selon l'une quelconque des revendications précédentes, dans laquelle le dispositif de frein est disposé pour ne pas freiner l'au moins un pignon (120, 201, 125) dans le cas où le premier dispositif d'accouplement est dans un état, dans lequel le premier engrenage (120) est couplé à l'arbre d'entrée (101).

5. Unité principale de transmission de PTO (140) selon l'une quelconque des revendications précédentes, comprenant en outre un premier arbre de sortie (102) et un deuxième dispositif d'accouplement, dans laquelle le deuxième dispositif d'accouplement est disposé pour coupler le premier arbre de sortie (102) à l'arbre d'entrée (101) et le découpler de celui-ci.

6. Unité principale de transmission de PTO (140) selon la revendication 5, dans laquelle le premier arbre de sortie (102) est adapté pour être relié à un arbre d'entrée d'une boîte de vitesses (6) du véhicule (1).

7. Unité principale de transmission de PTO (140) selon l'une quelconque des revendications précédentes, comprenant en outre une pompe à huile (200) disposée pour lubrifier et refroidir au moins certains des composants de l'unité principale de transmission de PTO (140).

8. Unité principale de transmission de PTO (140) selon l'une quelconque des revendications précédentes, comprenant en outre un volant (195) couplé à l'arbre d'entrée (101).

9. Unité de sortie de PTO (130) pour un véhicule (1), l'unité de sortie de PTO comprenant :
- une deuxième logement (160) et
- un deuxième engrenage (110) disposé dans le deuxième logement (160),
**caractérisée en ce que** le deuxième logement (160) est disposé pour pouvoir être fixé au premier logement (150) de l'unité principale de transmission de PTO (140) selon l'une quelconque des revendications précédentes,
dans laquelle le deuxième engrenage (110) est disposé pour venir en prise avec le premier engrenage (120) de l'unité principale de PTO (140) lorsque le premier logement est fixé au deuxième logement.

10. Unité de sortie de PTO (130) selon la revendication 9, comprenant en outre un deuxième arbre de sortie (103) disposé pour être relié à un équipement supplémentaire du véhicule (1) .

11. PTO (5) comprenant l'unité principale de transmission de PTO (140) selon l'une quelconque des revendications 1 à 8 et l'unité de sortie de PTO (130) selon l'une quelconque des revendications 9 et 10.

12. Groupe motopropulseur (2) pour un véhicule (1), le groupe motopropulseur comprenant la PTO (5) selon la revendication 11.

13. Véhicule (1) comprenant le groupe motopropulseur (2) selon la revendication 12.
